# DEMANDE DE BREVET EUROPEEN

(11) **EP 4 181 002 A1**
(43) Date de publication de la demande: **17.05.2023**
(21) Numéro de dépôt: 22207512.9
(22) Date de dépôt: 15.11.2022
(51) Int. Cl.: G06F 21/55, G06F 21/56, G06N 20/00

(54) **PROCÉDÉ DE DÉTECTION D'UNE CYBERMENACE PESANT SUR UN SYSTÈME D'INFORMATION ; PRODUIT PROGRAMME D'ORDINATEUR ET SYSTÈME INFORMATIQUE ASSOCIÉS**

(30) Priorité: 15.11.2021 FR 2112041
(71) Demandeur: THALES, 92400 Courbevoie (FR)
(72) Inventeur: FONTARENSKY, Ivan, 78141 VELIZY CEDEX (FR); GUIGNARD, Romain, 78141 VELIZY CEDEX (FR); ETIENNE, Alexandre, 92622 GENNEVILLIERS CEDEX (FR)
(74) Mandataire: Lavoix

(57) **Abrégé**

Ce procédé, qui est réalisé par un système informatique (50, 40) comportant un composant de surveillance (42, 44, 46) du système d'information (10) à protéger, une base de données (54) d'informations de renseignement, et un module de recommandation (51) exécutant un moteur de proposition, consiste à : collecter un ensemble de données d'observation du fonctionnement du système d'information ; exécuter le module de recommandation pour interroger la base de données (54) en fonction d'un sous-ensemble des données collectées afin d'extraire des indicateurs pertinents ; et définir une proposition relative à une cyberattaque potentielle à partir des indicateurs extraits ; transmettre la proposition au composant de surveillance ; et, implémenter la proposition par le composant de surveillance pour surveiller le système d'information (10).

## Description

La présente invention concerne un procédé de détection d'une cybermenace susceptible de nuire à un système d'information.

Le renseignement sur les menaces et les attaques informatiques (dénommées de manière générale par « cybermenaces » dans le présent document), généralement dénommé « Cyber Threat Intelligence », est l'application des techniques du renseignement en général dans le domaine particulier de l'informatique, afin notamment de protéger le système d'information d'une organisation contre des cyberattaques.

Le renseignement sur les cybermenaces s'articule autour du cycle du renseignement, qui comporte les cinq étapes principales suivantes :
- la définition des besoins, permet à une organisation de définir les objectifs d'une mise en œuvre d'une politique de renseignement sur les cybermenaces pesant sur son système d'information ;
- la collecte de données, permet de définir les données brutes pertinentes pour atteindre les objectifs définis, les moyens pour collecter ces données brutes et la mise en œuvre de ces moyens de collecte ;
- le traitement, permet, à partir des données brutes collectées, de produire automatiquement une information exploitable pour identifier une cyberattaque ;
- l'analyse des résultats du traitement, permet de comprendre les informations obtenues en sortie du traitement pour savoir quand, comment et pourquoi une cyberattaque a été détectée ; et,
- la diffusion et la rétroaction, permet de partager les rapports établis lors de l'analyse entre différents acteurs de l'organisation pour la mise en place d'actions visant à améliorer la sécurité du système d'information (et éventuellement d'une redéfinition des besoins conduisant à une nouvelle itération du cycle du renseignement).

Dans l'état de la technique, si les premières étapes du cycle du renseignement sont abordées, la dernière étape relative à la diffusion et à la rétroaction (ou étape de dissémination) n'a jusqu'à présent pas été traitée.

La difficulté de la dissémination du « cyber-renseignement » est due au fait que le renseignement sur les cybermenaces est particulièrement compliqué à décliner en actions concrètes de surveillance et de sécurité. En effet, disposer d'un rapport d'analyse n'entraine pas mécaniquement le déploiement d'actions adaptées, car c'est dans un contexte particulier (celui de l'organisation dont on cherche à protéger le système d'information), que les renseignements prennent un sens. Si l'on ne tient pas compte de ce contexte, il y a un fort risque que les actions entreprises conduisent à des faux positifs, c'est-à-dire à la génération d'une alerte face à une cybermenace qui n'en est pas réellement une pour le système d'information particulier que l'on doit protéger.

Se pose par conséquent une problématique complexe sur la sélection des actions à déployer, l'instant de leur déploiement, et le taux de faux positifs associé.

Le but de cette invention est de résoudre ce problème.

Pour cela l'invention a pour objet un procédé de détection d'une cybermenace pesant sur un système d'information, le procédé étant mis en œuvre par un système de détection comportant au moins : un système de surveillance du système d'information ;une base de données d'informations de renseignement, lesdites informations de renseignement étant collectées auprès d'une pluralité de sources externes de renseignement ; et un module de recommandation, le module de recommandation mettant en œuvre un moteur de propositions, le procédé consistant à : collecter un ensemble de données d'observation d'un état de fonctionnement à l'instant courant du système d'information ; exécuter le module de recommandation pour extraire des informations de renseignement pertinentes de la base de données d'informations de renseignement en fonction de tout ou partie des données d'observation collectées, portant sur une cybermenace potentielle, et définir une proposition relative à ladite cyberattaque potentielle à partir des informations de renseignement pertinentes extraites ; transmettre la proposition au système de surveillance ; et implémenter la proposition par le système de surveillance pour surveiller le système d'information contre ladite cybermenace.

Suivant des modes particuliers de réalisation, le procédé comporte une ou plusieurs des caractéristiques suivantes, prises isolément ou suivant toutes les combinaisons techniquement possibles :
- le système de détection comportant en outre un module d'analyse de tendance capable d'analyser les informations de renseignement stockées dans la base de données pour déterminer une évolution de la cybermenace, exécuter le module de recommandation consiste à extraire des informations de renseignement via le module d'analyse de tendance.
- le système informatique comportant en outre un module d'investigation capable d'analyser les informations de renseignement stockées dans la base de données pour déterminer les cybermenaces les plus probables à l'instant courant, exécuter le module de recommandation consiste à extraire des informations de renseignement via le module d'investigation.
- collecter des données d'observation consiste à collecter des données brutes auprès du système d'information et à normaliser lesdites données brutes pour obtenir des données d'observation normalisées et utilisables par le module de recommandation.
- les données brutes sont générées par une composante matérielle, une composante de technologie de l'information et/ou une composante de technologie d'exploitation du système d'information à protéger.
- chaque donnée d'observation est étiquetée avec une classe dont elle relève, ladite classe permettant l'extraction d'informations de renseignement par le module de recommandation.
- le système de surveillance comporte : un composant de surveillance bas niveau, comme un composant de surveillance d'un réseau, un composant de surveillance d'une machine, ou un composant de surveillance d'une application logicielle du système d'information ; ou un composant haut niveau du système d'information.
- le procédé comporte une étape de transmission d'une rétroaction associée à une proposition par le système de surveillance vers le module de recommandation, conduisant le module de recommandation à générer une nouvelle proposition.
- la rétroaction est une alerte générée par le système de surveillance implémentant la proposition et détectant la cybermenace associée à ladite proposition.
- une proposition comporte une partie d'action, destinée à être mise en œuvre par le système de surveillance pour détecter ou contrer la cybermenace, et, de préférence, une partie de signature pour qualifier la cybermenace.

L'invention a également pour objet un produit programme d'ordinateur comportant des instructions logicielles qui, lorsqu'elles sont exécutées par un ordinateur, mettent en œuvre le procédé précédent.

L'invention a également pour objet un système informatique caractérisé en ce qu'il est adapté pour mettre en œuvre le procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation schématique d'une infrastructure comportant un système de détection pour la mise en œuvre du procédé de détection selon l'invention ; et,
La figure 2 est une représentation sous forme de bocs d'un mode de réalisation du procédé de détection selon l'invention.

### Système

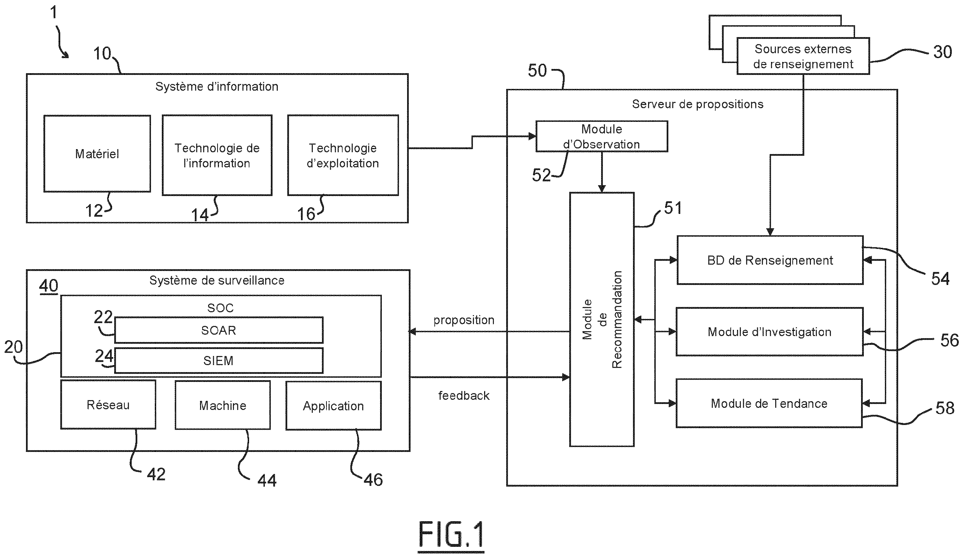

En se référant à la figure 1, un mode de réalisation préféré d'un système de détection pour la mise en œuvre du procédé de détection selon l'invention va être présenté, ce système informatique étant intégré au sein d'une infrastructure.

Ainsi, l'infrastructure 1 comporte :
- un système d'information 10 à protéger ;
- une plateforme informatique 50 offrant différents services ;
- une pluralité de sources externes de renseignements 30 ;
- un système de surveillance 40, client des services de la plateforme 50.

Le système de détection est constitué par la combinaison de la plateforme 50 et du système de surveillance 40.

Le système d'information 10 à protéger est celui d'une organisation, comme une entreprise, une institution, une association, etc.

Le système d'information 10 est vu par le système de détection comme une source de données brutes, qui permettent de connaître l'état de fonctionnement à l'instant courant du système d'information 10.

Le système d'information 10 comporte différentes composantes propres à générer des données brutes. Ces données sont hétérogènes.

Le système d'information 10 peut ainsi comporter une composante « matérielle » 12. Par exemple, le système d'information 10 comporte des caméras de surveillance connectées permettant de générer des données brutes sur les entrées et les sorties des bâtiments de l'organisation, ou des dispositifs d'identification de contrôle d'accès (lecteurs de badge pour ouvrir une porte, ou lecteurs d'empreintes pour déverrouiller un ordinateur).

Le système d'information 10 peut ainsi comporter une composante «technologie de l'information» 14, c'est-à-dire un ensemble de moyens permettant de générer des données brutes associées à l'ensemble des matériels, logiciels et services pour la collecte, le traitement et la transmission de l'information dans le système d'information 10 de l'organisation. Par exemple, les ordinateurs du système d'information 10 exécutent des logiciels, systèmes ou applicatifs, capables de générer des fichiers de journalisation (« log file » en anglais) enregistrant différents types d'événements au cours de l'exécution desdits logiciels ou encore des logiciels anti-virus sur les ordinateurs utilisés par les collaborateurs de l'organisation, ces logiciels anti-virus produisant périodiquement des rapports.

Le système d'information 10 peut également comporter une composante «technologie d'exploitation» 16, généralement appelé «OT» (« Operational Technology »), c'est-à-dire un ensemble de moyens permettant de générer des données brutes associées à la surveillance et/ou au contrôle directs des périphériques physiques, des processus, et des événements d'un système d'information industriels. Par exemple, le système d'information 10 peut comporter des systèmes de contrôle et d'acquisition de données en temps réel - SCADA, des automate programmable industriel (« programmable logic controller » - PLC), capables de générer périodiquement des rapports.

La plateforme informatique 50 constitue un serveur de proposition.

La plateforme informatique 50 comporte un module d'observation 52. Ce dernier est propre à collecter les données brutes produites par le système d'information 10. Avantageusement, le module d'observation 12 est adapté pour normaliser les données brutes reçues de manière à produire des données d'observation exploitables par les autres fonctionnalités de la plateforme informatique 50. De préférence, le module 52 applique un traitement statistique sur les données d'observation pour effectuer un classement de ces données. Ainsi, chaque données d'observation est étiquetée avec la classe dont elle relève.

La plateforme informatique 50 comporte une base de données de renseignement 54 stockant des informations de renseignement sur ce qui a été vu dans le cyberespace. La base de données 54 est périodiquement mise à jour par un flux d'informations de renseignement provenant des sources externes de renseignement 30. Avantageusement la base de données est une base de données orientée graphe dans laquelle les données sont structurées selon un graphe. En particulier, la base de données 54 comporte une pluralité d'indicateurs permettant d'interroger la base de données sous un certain angle. Des exemples d'indicateurs sont « une caractéristique de la cyberattaque», un « objectif du cyberattaquant », une « identité du cyberattaquant ».

La plateforme informatique 50 comporte un module d'investigation 56. Le module 56, qui est par exemple constitué d'un moteur et d'une base de données dédiés, est périodiquement exécuté pour analyser le contenu de la base de données 54 afin de déterminer ce qui se passe dans le cyberespace et identifier les cybermenaces qui se développent à l'instant courant dans le cyberespace. Le module d'investigation 56 permet notamment de créer le graphe d'organisation des données dans la base de données 54. Le module 56 peut également être utilisé pour compléter, qualifier, ou valider une information.

La plateforme informatique 50 comporte un module d'analyse de tendance 58. Le module 58, qui est par exemple constitué d'un moteur et d'une base de données dédiés, est périodiquement exécuté pour analyser le contenu de la base de données 54 afin de définir ce qui peut se passer dans un avenir proche compte tenu de la situation actuelle dans le cyberespace. Le module 58 détermine les tendances en termes de cybermenaces. Il peut également être utilisé pour indiquer l'évolution temporelle d'une cybermenace à l'instant courant.

La plateforme 50 comporte un module de recommandation 51 propre à exécuter un algorithme de propositions (aussi dénommé moteur de propositions). Cet algorithme est par exemple un algorithme d'apprentissage d'intelligence artificielle (« machine learning » en anglais).

Une proposition est une proposition sur une cybermenace pesant sur le système d'information 10.

Une proposition comporte une partie d'action (comme par exemple un identifiant d'un composant du système d'information 10 à mettre sous surveillance, une règle de surveillance à appliquer par un composant de surveillance du système de surveillance 40, etc.), et avantageusement une partie de signature de la cybermenace (comme par exemple la méthodologie utilisée par l'attaquant, l'identité de l'attaquant, etc.).

Le module de recommandation 51 est adapté pour, au fur et à mesure que le système d'information 10 vit et qu'il remonte des données d'observation sur ce qui se déroule en son sein, sélectionner tout ou partie des données d'observation.

Le module 51 est adapté pour construire une requête sur la base de données 54, et avantageusement sur les bases de données des modules 56 et 58, en fonction des données d'observation sélectionnées. Notamment, le module 51 se fonde sur la classe des données d'observation pour construire la requête sur la base de données 54. La requête est de préférence une requête d'inférence.

Le module 51 est adapté pour interroger la base de données 54, et avantageusement sur les bases de données des modules 56 et 58, avec la requête préparée de manière à extraire des informations de renseignement pertinentes par rapport à l'état de fonctionnement à l'instant courant du système d'information 10.

Les informations de renseignement extraites sont spécifiques de la ou des cybermenace(s) pesant sur le système d'information 10 à protéger.

Les informations de renseignement extraites comprennent notamment, pour chaque cybermenace, un ensemble d'actions élémentaires (comme des règles de bas niveau déjà écrites pour certaines cybermenaces) associées à cette dernière dans la base de données 54.

Enfin, le module 51 est propre, en agrégeant les informations de renseignement extraites, de générer une proposition par cybermenace. Notamment, le module 51 est capable de générer des règles de haut niveau par combinaison de règles de bas niveau.

Le module 51 est propre à recevoir une rétroaction, ou « feedback », comme une alerte de détection d'une cybermenace par le système de surveillance 40.

Le module 51 est capable de proposer automatiquement une mise à jour de la proposition associée à la cybermenace objet de la rétroaction.

Pour ce faire, le module 51est propre à construire une nouvelle requête, à l'appliquer à la ou les base(s) de données de la plateforme 50 afin d'extraire de nouvelles informations de renseignement, plus spécifiques de la cybermenace objet de l'alerte et ainsi conduire à une mise à jour de la proposition associée à cette cybermenace ou au déploiement de nouvelles propositions associée à cette cybermenace.

Il est à noter que la partie de signature d'une proposition permet, en cas de remontée d'une rétroaction, de qualifier la cybermenace associée à cette alerte.

La capacité de mettre à jour une proposition à partir de renseignements plus spécifiques permet donc de mieux qualifier une alerte : incident réel ou faux positif. Une telle possibilité de qualifier une alerte constitue une aide à un central d'opération de sécurité - SOC associé au système d'information 10.

Le système de surveillance 40 comporte une couche bas niveau comportant une pluralité de composants de surveillance comme un ou plusieurs composant(s) de réseau 42 (tel qu'une sonde d'inspection de paquets ou « Deep Paquet Inspection » - DPI), un ou plusieurs composant(s) de machine 44 (tel qu'un logiciel anti-virus ou « Endpoint Détection and Response » - EDR), et/ou un composant de logiciel (tel qu'un fichier de journalisation). Ces composants font partie des différentes composantes du système d'information 10.

Le système de surveillance 40 comporte une couche haut niveau 20, formant par exemple un central d'opération de sécurité ou « Security Opération Center » - SOC comportant par exemple :
- un composant de Gestion des informations et des événements liés à la sécurité - SIEM 22 (« Security Information and Event Management ») ; et,
- un composant d'Orchestration, automatisation et réponse en matière de sécurité - SOAR 24 (« Security Orchestration, Automation and Response »), un tel composant s'appuyant sur des processus figés et standardisés permettant de simplifier la gestion des outils de détection.

Le système 40 et la plateforme 50 communiquent selon un protocole de communication prédéfini.

Le module de recommandation 51 transmet au système de surveillance 40 les propositions de cybermenace.

Le système de surveillance 40 implémente chaque proposition reçue. Notamment, la partie d'action d'une proposition permet de configurer un ou plusieurs des composants du système 40 pour surveiller spécifiquement le système d'information 10 contre la cybermenace associée à cette proposition.

Le système de surveillance 40 remonte au module de recommandation 51 une rétroaction sur l'une ou l'autre des propositions qu'il implémente à l'instant courant. Une rétroaction est une suspicion de cyberattaque (c'est-à-dire une cybermenace qui se concrétise). En particulier, une rétroaction est une alerte générée suite à l'application de la partie d'action d'une proposition de cybermenace et la détection de la cyberattaque correspondante.

### Procédé

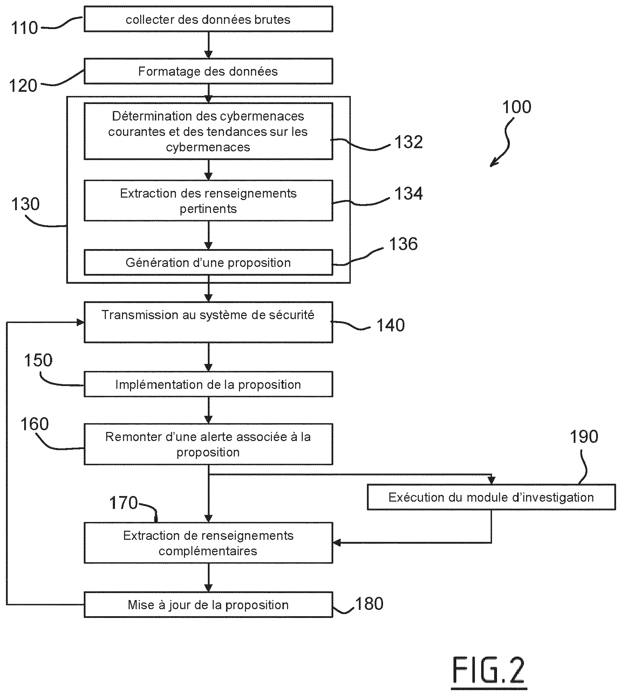

Un mode de réalisation préféré du procédé de détection selon l'invention va maintenant être présenté en relation avec la figure 2.

Le procédé de détection 100 comporte une première étape 110 consistant à collecter des données brutes.

Plus précisément, les composantes matérielles et/ou logicielles, 12, 14 et 16, du système d'information 10 génèrent des données brutes, qui sont transmises à la plateforme 50.

Par exemple, une première sonde équipant le réseau de communication du système d'information 10 remonte des données brutes telles que par exemple :
- 80% flux HTTP / 19% flux DNS / 0,1% Modbus /... / 0% FTP;
- Taille moyenne des paquets : 800Ko ;
- Dans les 24 dernières heures, Nombre d'IP sources : 10 / Nombres d'IP destination 400 ;
- Liste des utilisateurs (« Users Agents ») ;
- Type d'applications utilisées dans l'entreprise et leurs versions (IIS, Apache, etc.) ;
- Localisation et secteur d'activité d'un utilisateur employé de l'entreprise.

Il est à noter que les données brutes collectées définissent le périmètre sur lequel le fonctionnement du système d'information 10 est observé. Une organisation ayant rarement une vue précise de l'étendue de son système d'information, il est préférable d'étendre au maximum le périmètre de collecte d'information en faisant remonter un maximum de données brutes vers la plateforme 50, à charge à cette dernière d'identifier les données brutes signifiantes vis-à-vis de telle ou telle cybermenace.

A l'étape 120, les données brutes reçues par la plateforme 50, qui sont des données hétérogènes, sont formatées par exécution des méthodes de normalisation du module d'observation 52. Des données d'observation formatées sont produites en sortie. Par exemple, une donnée d'observation comporte un attribut de classe.

A l'étape 130, le module de recommandation 51, ayant reçu les données d'observation de l'état de fonctionnement à l'instant courant du système d'information 10, recherche le renseignement le mieux adapté pour identifier les cybermenaces pesant à l'instant courant sur le système d'information 10 et générer le cas échéant une proposition par cyberattaque identifiée.

Pour cela, le module de recommandation 51 sélectionne tout ou partie des données d'observations reçues.

De préférence, le module 51 interroge, à l'étape 132, le module d'investigation 56 et/ou le module d'analyse de tendance 58 pour connaitre les cybermenaces à l'instant courant qui ont été détectées par les sources de renseignement externes 30 dans le cyberespace et/ou les cybermenaces qui risquent de se développer dans un avenir proche, compte tenu de la situation dans le cyberespace tel que rapporté dans la base de données de renseignement 54.

Par exemple, le module 56 indique au module 51 les cybermenaces courantes suivantes :
- Augmentation des logiciels malveillants rançonneurs (« ransomware ») sur les protocoles de communication industriels (par exemple Modbus) ;
- Secteur de la santé visé par des groupes d'attaquants ;
- Nouvelles attaques sur les serveurs IIS (Serveur Web développé par la société Microsoft).

Puis, à l'étape 134, le module 51 construit une requête sur la base de données 54 à partir des données d'observation et, de préférence, des informations délivrées par les module 56 et 58.

Le module 51 applique cette requête pour interroger la base de données 54 et en extraire les informations de renseignement sur les cybermenaces ayant le plus de chance d'affecter le système d'information 10 à l'instant courant.

Les informations de renseignement extraites correspondent de préférence à des actions (par exemple à des règles de bas niveau de détection d'une cybermenace de « ransomware » appliquées aux protocoles industriels ou encore des règles de bas niveau de détection permettant de détecter des exploitations sur les serveurs IIS) et, avantageusement, des signatures associées (comme les méthodologies des cybermenaces de « ransomware » ou encore celles affectant les serveurs IIS).

A l'étape 136, le module de recommandation 51 consolide les différentes informations de renseignement extraites et génère une proposition pour une cybermenace particulière. Celle-ci comporte une partie d'action (comme une règle de haut niveau de surveillance construite à partir des règles de bas niveau et/ou une consigne d'utilisation pour détecter la survenue de la cybermenace ou s'en prémunir). Avantageusement, elle comporte également une partie de signature (comme une attribution de la cybermenace à un attaquant particulier et/ou la manière dont la cybermenace se développe au cours du temps).

A l'étape 140, la proposition générée, ou tout au moins sa composante d'action, est transmise au système de surveillance 40, de préférence à un composant de surveillance bas niveau. Il s'agit par exemple d'une seconde sonde d'inspection de paquets placée sur le réseau du système d'information 10.

A l'étape 150, la système 40 implémente la proposition reçue. La seconde sonde est par exemple configurée dynamiquement pour mettre en oeuvre les règles de filtrage contenues dans la proposition reçue.

Puis, au cours du fonctionnement de système d'information, de manière asynchrone avec les étapes précédentes, le procédé se poursuit lorsqu'à l'étape 160, le système de surveillance 40 remonte une rétroaction comme une alerte, associée à une proposition particulière implémentée par le système 40 et, par conséquent, à une cybermenace particulière. L'alerte est par exemple émise à cause de l'observation, par la seconde sonde, d'un trafic malveillant, tel que par exemple la détection d'une communication entre un logiciel malveillant et son centre de contrôle et de commande - C&C (« Command and Control ») répondant à une règle de filtrage de ladite sonde. L'alerte remontée comporte divers attributs, comme par exemple une URL du centre de C&C du logiciel malveillant.

A l'étape 170, à partir de cette rétroaction, le module de recommandation 51 est exécuté à nouveau pour extraire des informations de renseignement complémentaires en tenant compte des attributs de la rétroaction et le cas échéant la partie de signature de la proposition associée. Des étapes similaires aux étapes 132, 134 et 136 sont réalisées.

Par exemple, l'URL indiquée dans les attributs de l'alerte est associée à un groupe d'attaquant « X » qui lui-même est relié à d'autres règles bas niveau de détection (hash / IP / domain) dans la base de données 54.

A l'étape 180, le module 51 génère une proposition mise à jour avec les nouvelles informations de renseignement extraites lors de l'étape 170.

Parallèlement ou alternativement, à l'étape 190, le module de recommandation 51 lance l'exécution du module d'investigation 56 et/ou le module de tendance 58 pour analyser en temps réel les attributs de la rétroaction, comme par exemple l'URL suspecte indiquée dans l'alerte reçue afin de mieux qualifier la cybermenace correspondante et savoir comment elle va se développer dans le temps.

Par exemple, le module de tendance 58 propose que les données d'un rapport d'un bac à sable (« sandbox ») ou d'un fichier de journalisation soient analysées sur une période particulière.

Avec ou sans de telles nouvelles données d'observation, les étapes 170 et 180 sont réalisées.

Cela va par exemple conduire à une mise à jour de la proposition associée à la cybermenace objet de la rétroaction avec une nouvelles règle de blocage des fichiers malveillants correspondant à une valeur de hachage ( « hash ») pour éviter une propagation de la cybermenace.

Mais cela peut également conduire au classement de l'alerte comme un faux positif. En effet, si l'analyse de fichier de journalisation ne permet pas d'extraire des information de renseignement cohérentes avec la cybermenace objet de la rétroaction, la proposition initiale est classée comme un faux positif. Un taux de faux positif trop élevé peut conduire à une mise à jour de la proposition correspondante ou même à sa suppression, n'étant pas efficace pour protéger le système d'information 10 considéré.

Ainsi, progressivement, grâce à la boucle de rétroaction sur les propositions de cybermenaces, le moteur de propositions affine les propositions de cybermenace pour les adapter au système d'information à protéger.

La boucle de rétroaction peut être mise en œuvre sur un temps court. Par exemple, alors qu'un type d'attaque a été détecté, le moteur de proposition permet de mettre rapidement en œuvre des propositions supplémentaires visant à contrer cette attaque et éviter qu'elle ne se propage. Par exemple, alors qu'une proposition générale consiste à surveiller les menaces du type « ransomware », à l'instant de la détection d'une attaque de ce type, une proposition plus fine permet par exemple de bloquer une URL particulière utilisée par une attaque particulière (l'URL ayant été identifiée par les sources externes de renseignement 30 et stockée dans la base de données de connaissance 54).

En variante ou en complément du mode de réalisation précédent où une proposition est implémentée par un composant de bas niveau du système de surveillance et la rétroaction est émise par ce composant, c'est un composant de plus haut niveau du système de surveillance 40, comme le SIEM 24, qui implémente la proposition et/ou émet une rétroaction. Par exemple, le SIEM peut réaliser une corrélation des alertes des composants bas niveau, et générer une rétroaction agrégeant divers attributs d'une même cyberattaque détectée.

Avantageusement, la partie de signature d'une proposition permet de qualifier la cyberattaque lorsqu'elle se déroule.

Par exemple, la partie de signature indique :
- l'attaquant est connu sous le nom de « X » ;
- l'attaquant « X » a l'habitude de faire du sabotage des systèmes industriels ;
- il débute son attaque par la compromission d'un serveurs puis se propage sur le reste du système d'information.

Une telle signature peut aider les couches les plus haute du système de surveillance 40 à qualifier une alerte, notamment les opérateurs du SOC.

Il est à noter que les étapes 110, 120 et 130 peuvent être exécutées périodiquement, pour conduire à la configuration du système de surveillance 40 avec un autre jeu de propositions. Cela est par exemple le cas lorsque le périmètre du système d'information 10 est modifié, lorsque l'ensemble des données d'observation prise en compte par le moteur de propositions est modifié, lorsque la base de connaissance est mise à jour, lorsque le module d'investigation ou le module d'analyse de tendance indique un fort risque sur une attaque particulière ou encore lorsqu'une précédente proposition est implémentée depuis longtemps mais n'a conduit à aucune rétroaction (indiquant ainsi qu'elle n'est peut-être pas adaptée au système d'information à protéger).

Il est à noter que la mise à jour d'une proposition peut consister à modifier uniquement sa partie d'action ou sa partie de signature.

### Avantages

Le procédé selon l'invention permet d'appréhender le système d'information à protéger comme un abonné d'une plateforme de services, qui apprend sur les usages de l'abonné et lui propose des actions de surveillance adaptées à ses besoins de protection.

L'invention permet le déploiement aisé d'un flux d'information de renseignements sur les menaces pour un central d'opération de sécurité - SOC ou pour l'équipe configurant un produit de sécurité.

Elle permet d'acquérir une connaissance « terrain » automatiquement, alors même que bien souvent le client lui-même n'a pas cette connaissance. En effet, la collecte des données brutes s'effectue sur l'ensemble du périmètre du système d'information sans a priori.

La rétroaction assure une capitalisation automatique et la mise en place d'une boucle vertueuse de renseignement. Cela permet d'améliorer la détection et de diminuer le taux de faux positifs qu'un dispositif de surveillance peut remonter, dans la mesure où les propositions sont progressivement mises à jour pour finalement être adaptées au contexte du système d'information à protéger.

L'extraction d'informations de renseignement adaptées, comme par exemple la méthodologie de l'attaquant, facilite fortement l'implémentation d'actions de défense adaptées, non seulement en prévention, mais également au cours de l'attaque pour éviter une propagation.

La présente invention correspond à une mise en œuvre de processus de détection adaptatifs et non déterministes.

La présente invention permet donc de répondre automatiquement aux problématiques :
- de sélection des menaces cyber à surveiller dans un environnement inconnu et de définition des actions de surveillance à mettre en place ;
- de qualification d'une alerte portant sur une menace surveillée et, compte tenu des informations de renseignement sur l'attaque (comme la méthodologie employée par l'attaquent ou son identité), configurer par de nouvelles propositions le système de surveillance afin d'anticiper les prochains mouvements de l'attaque et ainsi éviter qu'elle s'étende.

L'homme du métier constatera que la présente invention permet certes une configuration dynamique des produits de sécurité (sonde DPI, EDR, etc.), mais également constitue une source supplémentaire de renseignements pour le système de sécurité de l'organisation (SOC, etc.) pour qualifier une attaque.

## Revendications

1. Procédé de détection (100) d'une cybermenace pesant sur un système d'information (10), le procédé étant mis en oeuvre par un système de détection (50, 40) comportant au moins :
- un système de surveillance (40) du système d'information (10) ;
- une base de données (54) d'informations de renseignement, lesdites informations de renseignement étant collectées auprès d'une pluralité de sources externes de renseignement (30) ; et,
- un module de recommandation (51), le module de recommandation mettant en œuvre un moteur de propositions,
le procédé consistant à :
- collecter (110) un ensemble de données d'observation d'un état de fonctionnement à l'instant courant du système d'information (10) ;
- exécuter (130) le module de recommandation pour extraire des informations de renseignement pertinentes de la base de données d'informations de renseignement en fonction de tout ou partie des données d'observation collectées, portant sur une cybermenace potentielle, et définir une proposition relative à ladite cyberattaque potentielle à partir des informations de renseignement pertinentes extraites ;
- transmettre (140) la proposition au système de surveillance ; et,
- implémenter (150) la proposition par le système de surveillance pour surveiller le système d'information (10) contre ladite cybermenace,
le système informatique comportant en outre un module d'investigation (56) capable d'analyser les informations de renseignement stockées dans la base de données (54) pour déterminer les cybermenaces les plus probables à l'instant courant, exécuter le module de recommandation (51) consiste à extraire des informations de renseignement via le module d'investigation (56).

2. Procédé selon la revendication 1, dans lequel, le système de détection comportant en outre un module d'analyse de tendance (58) capable d'analyser les informations de renseignement stockées dans la base de données (54) pour déterminer une évolution de la cybermenace, exécuter le module de recommandation (51) consiste à extraire des informations de renseignement via le module d'analyse de tendance (58).

3. Procédé selon l'une quelconque des revendications 1 à 2, dans lequel collecter (110) des données d'observation consiste à collecter des données brutes auprès du système d'information (10) et à normaliser lesdites données brutes pour obtenir des données d'observation normalisées et utilisables par le module de recommandation (51).

4. Procédé selon la revendication 3, dans lequel les données brutes sont générées par une composante matérielle (12), une composante de technologie de l'information (14) et/ou une composante de technologie d'exploitation du système d'information (10) à protéger.

5. Procédé selon l'une quelconque des revendications 1 à 4, dans lequel chaque donnée d'observation est étiquetée avec une classe dont elle relève, ladite classe permettant l'extraction d'informations de renseignement par le module de recommandation (51).

6. Procédé selon l'une quelconque des revendications 1 à 5, dans lequel le système de surveillance comporte : un composant de surveillance bas niveau, comme un composant de surveillance d'un réseau (42), un composant de surveillance d'une machine (44), ou un composant de surveillance d'une application logicielle (46) du système d'information (10) ; ou un composant haut niveau du système d'information (10).

7. Procédé selon l'une quelconque des revendications 1 à 6, comportant une étape de transmission (160) d'une rétroaction associée à une proposition par le système de surveillance (40) vers le module de recommandation (51), conduisant le module de recommandation à générer une nouvelle proposition.

8. Procédé selon la revendication 7, dans lequel la rétroaction est une alerte générée par le système de surveillance implémentant la proposition et détectant la cybermenace associée à ladite proposition.

9. Procédé selon l'une quelconque des revendications 1 à 8, dans lequel une proposition comporte une partie d'action, destinée à être mise en œuvre par le système de surveillance (40) pour détecter ou contrer la cybermenace, et, de préférence, une partie de signature pour qualifier la cybermenace.

10. Produit programme d'ordinateur comportant des instructions logicielles qui, lorsqu'elles sont exécutées par un ordinateur, mettent en œuvre un procédé selon l'une quelconque des revendications précédentes.

11. Système de détection (50, 40) **caractérisé en ce qu'**il est adapté pour mettre en œuvre le procédé de détection d'une cybermenace pesant sur un système d'information (10) selon l'une quelconque des revendications 1 à 9, le système informatique comportant au moins :
- un système de surveillance (42, 44, 46) du système d'information ;
- une base de données (54) d'informations de renseignement collectées auprès d'une pluralité de sources de renseignement (30) ; et,
- un module de recommandation (51) mettant en œuvre un moteur de propositions.
